# EUROPEAN PATENT SPECIFICATION

(11) **EP 3 270 016 B1**
(45) Date of publication and mention of the grant of the patent: **02.03.2022**
(21) Application number: 16761691.1
(22) Date of filing: 06.03.2016
(51) Int. Cl.: F16J 15/34, F16C 33/10, F16C 33/12, F16C 33/14, B23K 26/0622

(54) **METHOD OF PROCESSING A SLIDING COMPONENT**
VERFAHREN ZUR BEARBEITUNG EINES GLEITENDEN BAUTEILS
PROCÉDÉ DE TRAITEMENT D'UN ÉLÉMENT COULISSANT

(30) Priority: 11.03.2015 JP 2015047888
(43) Date of publication of application: 17.01.2018
(73) Proprietor: Eagle Industry Co., Ltd., Minato-ku Tokyo 105-8587 (JP)
(72) Inventor: HOSOE, Takeshi, Tokyo 105-8587 (JP); INOUE, Hideyuki, Tokyo 105-8587 (JP); NEGISHI, Yuta, Tokyo 105-8587 (JP)
(74) Representative: TBK
(86) International application number: PCT/JP2016/056903
(87) International publication number: WO 2016/143721

(56) References cited:
- WO-A1-2013/176011
- JP-A- 2002 507 270
- JP-A- 2003 184 883
- US-A- 6 002 100
- US-A1- 2003 128 903
- US-A1- 2011 048 810

## Description

The present invention relates to a method of processing a sliding component according to the preamble of claim 1, the features of which are known from e.g. document US 2011/048810 A1. Such a sliding component is suitable for, for example, mechanical seals, bearings, and other sliding units. In particular, the present invention relates to sliding parts such as seal rings or bearings that require friction reduction by interposing fluid between sliding faces, and prevention of fluid leakage from the sliding faces.

In order for a mechanical seal, an example of a sliding component, to maintain sealing performance for the long term, it must satisfy both conflicting conditions of "sealing" and "lubrication." In particular, in recent years, for environmental measures or the like, there has been an increasing demand for a further friction reduction to reduce mechanical loss while preventing leakage of sealed fluid. In a technique to reduce friction, various textures are given to sliding faces to achieve these. For example, one known texture is the alignment of dimples on a sliding face.

For example, in the invention described in JP H11-287329 A, by forming a large number of dimples of different depths on a sliding face, load capacity is stabilized because load capacity due to a fluid bearing pressure produced in fluid interposed between the sliding face and an opposing sliding face during sliding decreases in some dimples with changes in fluid temperature but increases in other dimples, so that an effect of maintaining constantly good sliding performance regardless of changes in temperature is obtained.

In the invention described in JP 2000-169266 A, a sliding face is formed by evaporating a hard coating on a surface of a substrate material made of a sintered ceramics material, and the sliding face is configured to have a large number of dimples, so that wear resistance is improved and liquid lubricity by the dimples is improved.

However, the invention described in JP H11-287329 A focuses on the depths of dimples provided on a sliding face to maintain constantly good sliding performance regardless of changes in temperature, and does not give consideration to improving sliding characteristics in a wide range of bearing characteristic numbers on a sliding face, and generating a predetermined dynamic pressure by dimples processed accurately.

The invention described in JP 2000-169266 A provides dimples on a sliding face to improve liquid lubricity, but, like Patent Document 1, does not give consideration to improving sliding characteristics in a wide range of bearing characteristic numbers on a sliding face, and generating a predetermined dynamic pressure by dimples processed accurately.

The present invention has the object of providing a method of processing a sliding component capable of achieving both improvement in sliding characteristics in a wide range of bearing characteristic numbers on a sliding face, and generation of a predetermined dynamic pressure by dimples processed accurately.

The object of the invention is achieved by a method of processing a sliding component according to claim 1. Advantageous embodiments are carried out according to the dependent claims.

According to the invention, a sliding component processed according to a first aspect of the present invention is a sliding component including a plurality of dimples disposed on at least one of sliding faces of a pair of sliding parts relatively sliding on each other, the plurality of dimples being provided mutually independently of the other dimples and disposed in a randomly distributed manner, each of the dimples constituting a shallow groove with a depth in a range of 0.05 µm to 10 µm, the dimples having a bottom surface whose roughness Ra is 1/10 or less of a processing depth. The plurality of dimples has an opening diameter set in a range of 10 to 500 µm.

Thereby, the friction coefficient can be reduced in a wide range of bearing characteristic numbers, and a fluid film between the sliding faces can be increased to improve lubrication performance, and a predetermined dynamic pressure can be generated by accurate positive-pressure generation grooves, and further the sliding face has no undulations because the effect of heat during processing is small, so that the sliding component having the sliding faces with good sealing performance can be provided. The sliding characteristics can be further improved in a wide range of bearing characteristic numbers on the sliding face.

According to the invention, a protuberance formed by debris at an edge of a processed portion is less than 0.01 µm. Therefore, a sliding component having the sliding faces with better sealing performance can be provided.

In the sliding component, the plurality of dimples can have a depth set in a range of 50 to 5000 nm. Therefore, the friction coefficient on the sliding face can be reduced.

In the sliding component, the plurality of dimples can have a depth set in a range of 50 to 1000 nm.

Therefore, the sliding characteristics at extremely low speed on the sliding face can be made favorable.

In the sliding component in any one of the first to fifth aspects, the plurality of dimples can have an area ratio to the sliding face in a range of 30 to 50%. Therefore, both sealing and lubrication on the sliding face can be achieved.

According to the invention, in the sliding component, each of the dimples is formed by irradiation with an ultrashort pulse laser, the ultrashort pulse laser has a repetition frequency of 5 kHz or higher, and the ultrashort pulse laser has a pulse width of less than 10 picoseconds.

Therefore, processing time can be set at a proper value even when the number of pulse repetitions is large, and heat generation by one pulse can be reduced.

### Effect of the Invention

The present invention achieves outstanding effects as below.
(1) The friction coefficient can be reduced in a wide range of bearing characteristic numbers, and a fluid film between the sliding faces can be increased to improve lubrication performance, and a predetermined dynamic pressure can be generated by accurate positive-pressure generation grooves, and further the sliding face has no undulations because the effect of heat during processing is small, so that the sliding component having the sliding faces with good sealing performance can be provided.
(2) A protuberance formed by debris at the edge of a processed portion is less than 0.01 µm, so that the sliding component having the sliding faces with better sealing performance can be provided.

(3) The plurality of dimples has an opening diameter set in a range of 10 to 500 µm, so that the sliding characteristics can be further improved in a wide range of bearing characteristic numbers on the sliding face.

(4) The plurality of dimples has a depth set in a range of 50 to 10000 nm, so that the friction coefficient on the sliding face can be reduced.

(5) The plurality of dimples has a depth set in a range of 50 to 1000 nm, so that the sliding characteristics at extremely low speed on the sliding face can be made favorable.

(6) The plurality of dimples has an area ratio to the sliding face in a range of 30 to 50%, so that both sealing and lubrication on the sliding face can be achieved.

(7) The repetition frequency of the ultrashort pulse laser is 5 kHz or higher, so that processing time can be set at a proper value even when the number of pulse repetitions is large.

(8) The pulse width of the ultrashort pulse laser is less than 10 picoseconds, so that heat generation by one pulse can be reduced.

### BRIEF DESCRIPTION OF THE DRAWINGS

Fig. 1 is a vertical cross-sectional view showing an example of a mechanical seal as a sliding component processed according to a first embodiment of the present invention.
Fig. 2 is for illustrating an example of a sliding face of a sliding part according to the embodiment of the present invention: (a) is a plan view of the sliding face; (b) is a cross-sectional view along A-A; and (c) is a cross-sectional view along B-B.
Fig. 3 is an explanatory view illustrating the function of a dimple.
Fig. 4 is a plan view of the sliding face showing dimples disposed randomly on the sliding face of the sliding part processed according to the embodiment of the present invention.
Fig. 5 is a schematic view showing the general configuration of a processing device used in a process of processing the sliding face of the sliding part in the present invention.
Fig. 6 shows processing test results on the sliding part in the present invention when the wavelength of an ultrashort pulse laser is 1030 nm.
Fig. 7 shows processing test results on the sliding part in the present invention when the wavelength of the ultrashort pulse laser is 515 nm.
Fig. 8 is a chart showing evaluation results on the condition of a processed surface and protuberance at a processed portion edge when processed with different irradiation fluences of the ultrashort pulse laser.
Fig. 9 shows the condition of a processed surface when processed using a picosecond laser as the ultrashort pulse laser: (a) is a micrograph of the processed surface; and (b) shows a cross section of the processed surface, representing roughness.
Fig. 10 shows the condition of a processed surface when processed using a nanosecond laser as a pulse laser:
   (a) is a micrograph of the processed surface; and (b) shows a cross section of the processed surface, representing roughness.
Fig. 11 is a plan view of the sliding face showing dimples disposed randomly on the sliding face of the sliding part processed according to the embodiment of the present invention, showing another modification.
Fig. 12 is a plan view of the sliding face showing dimples disposed randomly on the sliding face of the sliding part processed according to the embodiment of the present invention, showing still another modification.

Hereinafter with reference to the drawings, a form for implementing this invention will be described illustratively based on an embodiment. However, the dimensions, materials, shapes, relative arrangements, and the like of components described in the embodiment are not intended to limit the scope of the present invention only to them unless otherwise described explicitly.

### Embodiment

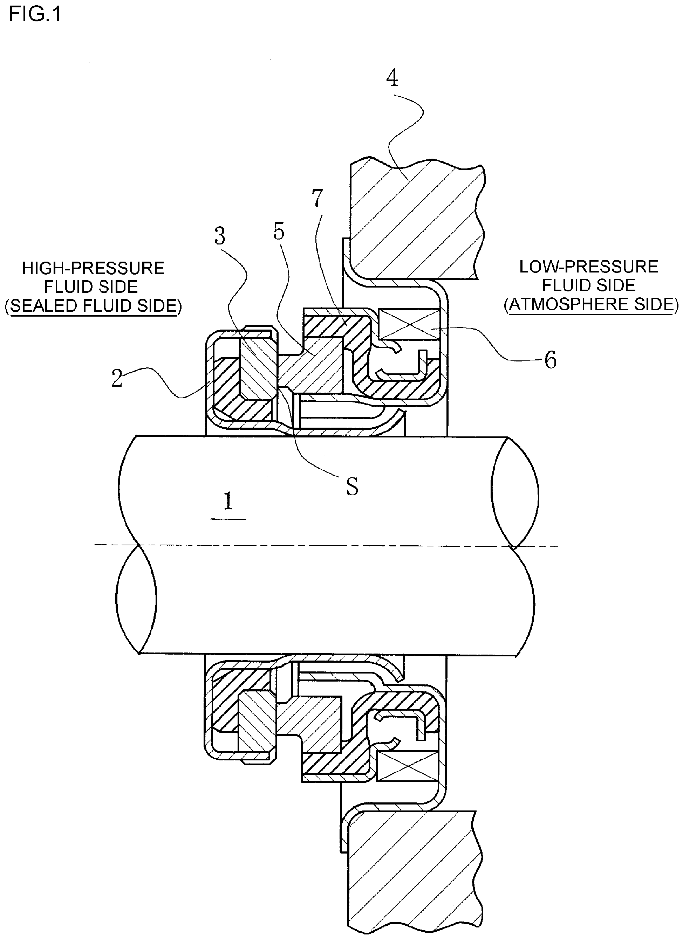

With reference to Figs. 1 to 9, a sliding component processed according to the present invention will be described.

Below, a mechanical seal, an example of the sliding component, is described as an example, but this is not limiting. For example, the sliding component can be used as a bearing sliding component that slides on a rotating shaft while sealing lubricating oil on axially one side of a cylindrical sliding face.

The outer peripheral side of the sliding component constituting the mechanical seal is described as the high-pressure fluid side (sealed fluid side), and the inner peripheral side as the low-pressure fluid side (atmosphere side), but the present invention is not limited to this, and is applicable to a case where the high-pressure fluid side and the low-pressure fluid side are reversed.

Fig. 1 is a vertical cross-sectional view showing an example of the mechanical seal, which is an inside mechanical seal in a form of sealing sealed fluid on the high-pressure fluid side heading from the outer periphery of sliding faces toward the inner periphery to leak. The mechanical seal is provided, on the side of a rotating shaft 1 to drive a pump impeller (not shown) on the high-pressure fluid side, with an annular rotating-side seal ring 3, one sliding part, provided in a state of being integrally rotatable with the rotating shaft 1 via a sleeve 2, and at a pump housing 4, with an annular stationary-side seal ring 5, the other sliding part, provided in a state of being non-rotatable and axially movable. By a coiled wave spring 6 and a bellows 7 axially urging the stationary-side seal ring 5, the rotating-side seal ring 3 and the stationary-side seal ring 5 slide in close contact with each other on sliding faces S mirror-finished by lapping or the like. That is, the mechanical seal prevents the sealed fluid from flowing out from the outer periphery of the rotating shaft 1 to the atmosphere side at the sliding faces S between the rotating-side seal ring 3 and the stationary-side seal ring 5.

Fig. 1 shows a case where the width of the sliding face of the rotating-side seal ring 3 is larger than the width of the sliding face of the stationary-side seal ring 5, but this is not limiting. The present invention is applicable to the opposite case as a matter of course.

The material of the rotating-side seal ring 3 and the stationary-side seal ring 5 is selected from silicon carbide (SiC) excellent in wear resistance, carbon excellent in self-lubricity, and the like. For example, both of them may be SiC, or a combination in which the rotating-side seal ring 3 is SiC and the stationary-side seal ring 5 is carbon is possible.

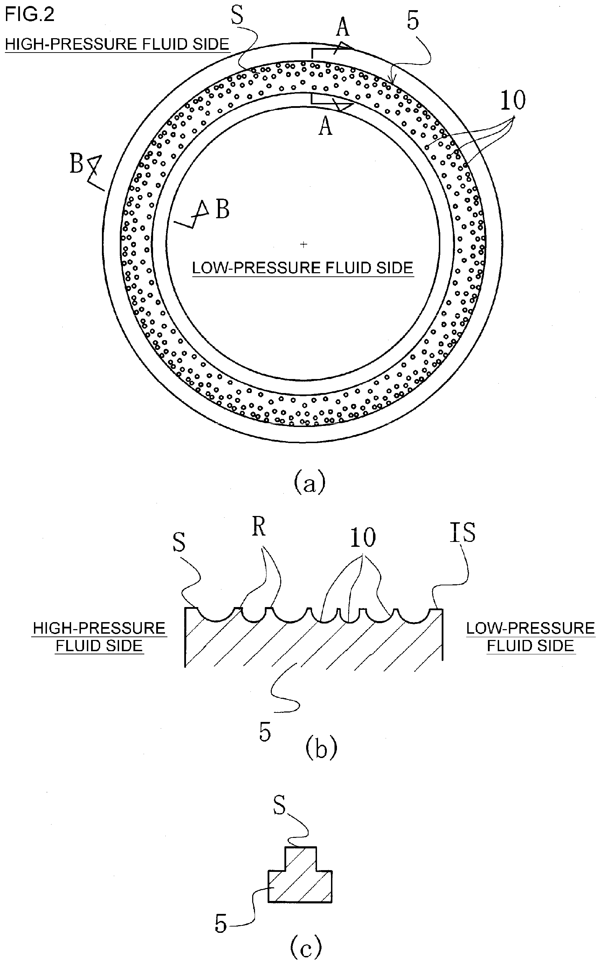

As shown in Fig. 2, dimples 10 are arranged on a sliding face of at least one of the rotating-side seal ring 3 and the stationary-side seal ring 5 that slide relatively.

In this embodiment, a plurality of dimples 10 is arranged on the sliding face S of the stationary-side seal ring 5. In this case, the rotating-side seal ring 3 need not be provided with dimples, or may be provided with dimples.

In Fig. 2, the cross-sectional shape of the sliding part is a protruded shape as shown in Fig. 2(c), and its top surface constitutes a flat sliding face S. On the sliding face S, a large number of dimples 10 as shown in Fig. 2(b) are independently provided. These dimples 10 are provided not across the entire radial width of the sliding face S but on a portion except a low-pressure fluid side sealing face IS formed such that a flat land portion R of a fixed width is left circumferentially on the low-pressure fluid side. On the high-pressure fluid side of the sliding face S, dimples 10 may be provided to the rim.

In the present invention, "dimples" are depressions formed on the flat sliding face S, and are not limited to a particular shape. For example, the planar shape of the depressions includes various shapes such as a circle, an ellipse, an oval, and a polygon, and the cross-sectional shape of the depressions includes various shapes such as a bowl shape and a square shape.

The large number of dimples 10 formed on the sliding face S have the function of holding part of liquid interposed as a hydrodynamic lubricating liquid film between the sliding face S and an opposing sliding face relatively sliding on the sliding face S, to stabilize the lubricating liquid film.

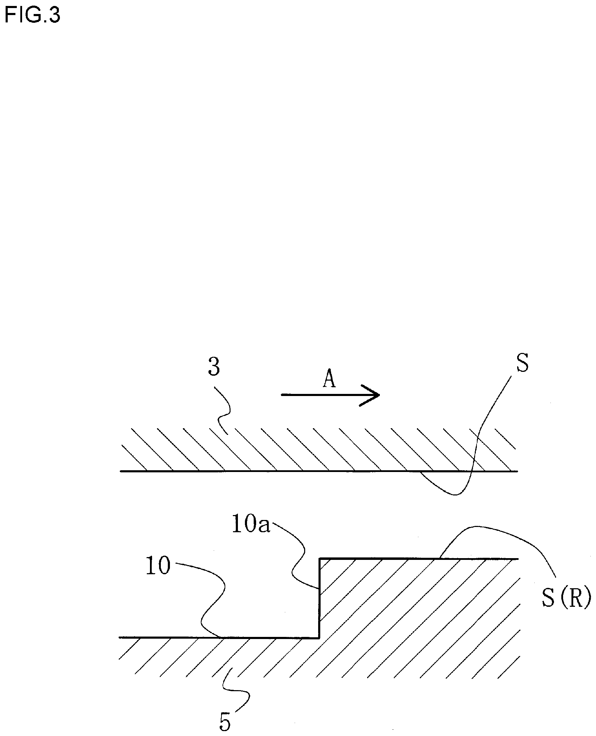

Each of the dimples 10 can be regarded as constituting a Rayleigh step as shown in Fig. 3.

In Fig. 3, a Rayleigh step 10a extending in a direction orthogonal to the cross section of the figure is formed on the sliding face S(R) of the stationary-side seal ring 5. The sliding face S of the rotating-side seal ring 3 is formed in a flat shape. When the rotating-side seal ring 3 relatively moves in a direction shown by an arrow, fluid interposed between the sliding faces moves following the arrow direction due to its viscosity. At that time, the presence of the Rayleigh step 10a generates dynamic pressure (positive pressure). The generation of the dynamic pressure increases the lubricating liquid film between the sliding faces, thus improving the lubrication performance. While the lubrication performance is improved by dynamic pressure effect, there is a possibility that the amount of leakage increases. When the amount of dimples is reduced to thin the lubricating liquid film to reduce the amount of leakage, the sliding faces S are more likely to contact to each other and generate friction.

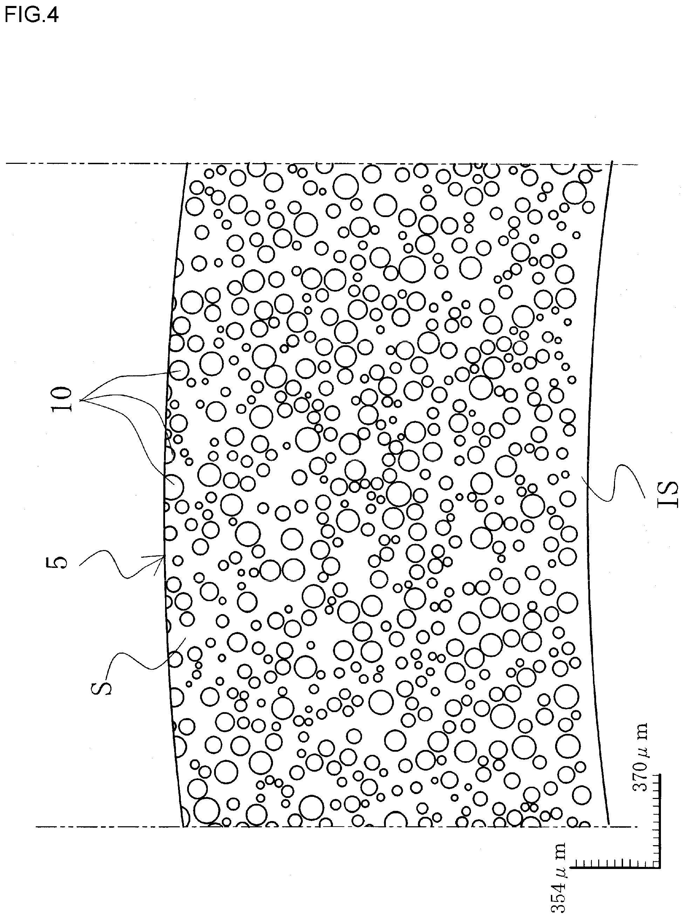

Fig. 4 is a plan view of the sliding face showing dimples disposed randomly on the sliding face of the sliding part processed according to the embodiment of the present invention. In Fig. 4, the same reference numerals and letters as those in Fig. 2 denote the same members as in Fig. 1, and their detailed descriptions are omitted.

In Fig. 4, a plurality of dimples 10 formed on the sliding face is provided mutually independently of the other dimples, and disposed in a randomly distributed manner.

The opening diameters of the plurality of dimples 10 may be all the same, or may be distributed in a certain range.

For example, in the case in Fig. 4, the opening diameters are distributed preferably in a range of 10 to 500 µm, and more preferably 30 to 100 µm. Therefore, the sliding characteristics can be further improved.

The depth of the plurality of dimples 10 is set in a range of 50 to 10000 nm from the aspect of friction coefficient reduction. However, when importance is attached to sliding characteristics at extremely low speed, the depth is set preferably in a range of 50 to 1000 nm, and more preferably 50 to 500 nm.

In order to achieve both sealing and lubrication, an area ratio of 40% of the plurality of dimples to the sliding face was used. The area ratio is not limited to this, and may be 30 to 50%.

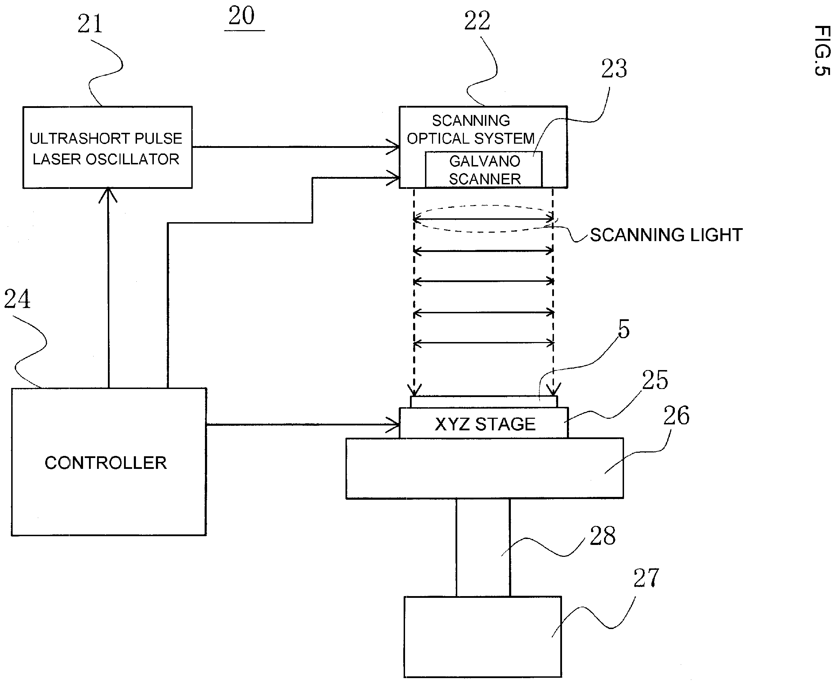

Next, with reference to Fig. 5, a processing method for processing a plurality of dimples 10 on a sliding face of a sliding part in the present invention will be described.

Fig. 5 is a schematic view showing the general configuration of a processing device 20 used in a process of processing a sliding face of a sliding part in the present invention.

The processing device 20 includes an ultrashort pulse laser oscillator 21 for emitting an ultrashort pulse laser, a scanning optical system 22 for irradiating a predetermined position on the stationary-side seal ring 5, a workpiece, with the ultrashort pulse laser, a controller 24, an XYZ stage 25, a base 26, and an elevating member 27. In this embodiment, the scanning optical system 22 includes a galvano scanner 23, and performs scanning in one direction, e.g. an X-axis direction, by the galvano scanner 23, and performs scanning in a Y-axis direction by the movement of the XYZ stage 25, utilizing the high-speed scanning performance of the galvano scanner 23. Thus, the XYZ stage 25 only needs to be movable in at least Y and Z directions. The XYZ stage 25 is placed on a top surface of the base 26, and the stationary-side seal ring 5, the workpiece, is mounted on the XYZ stage 25. The elevating member 27 is connected to the base 26 via a shaft 28.

Ultrashort pulse laser light generated from the ultrashort pulse laser oscillator 21 enters the scanning optical system 22. The scanning optical system 22 forms the ultrashort pulse laser light into a desired beam shape to concentrate the light onto a predetermined position on the surface of the stationary-side seal ring 5, the workpiece, on the XYZ stage 25. The material of the stationary-side seal ring 5, the workpiece, is, for example, SiC, Al2O3, ceramics, cemented carbide, stainless, or the like. In this embodiment, SiC is used as the stationary-side seal ring 5, the workpiece. According to the invention, the sliding part is formed from one material of SiC, Al2O3 and ceramics.

The controller 24 functions as a control device for controlling the drive of the ultrashort pulse laser oscillator 21, the scanning optical system 22, and the XYZ stage 25. That is, the controller 24 outputs drive signals to the ultrashort pulse laser oscillator 21, the scanning optical system 22, and the XYZ stage 25. The ultrashort pulse laser oscillator 21 generates an ultrashort pulse laser based on a fluence and a pulse width instructed by a drive signal from the controller 24, and emits the laser outside the device. Specifically, the drive signals from the controller 24 control the drive of components such as a diffraction grating, a prism, and a light-shielding filter in the ultrashort pulse laser oscillator 21.

In this embodiment, the ultrashort pulse laser oscillator 21 uses a light source with a pulse repetition frequency of 5 kHz or higher, a laser wavelength of 1030 nm or 515 nm, and a pulse width changeable up to less than 20 picoseconds.

Next, the operation of the processing device 20 will be described.

First, using the controller 24, basic parameters of ultrashort pulse laser light to be emitted are set. Settings of the basic parameters may be entered using an input device provided at the controller 24, for example. The basic parameters entered are, for example, a fluence, a pulse width, the number of shots, and the like. These basic parameters may be automatically calculated by an application program provided in the controller 24. Based on the obtained basic parameters, the controller 24 outputs a drive signal to the ultrashort pulse laser oscillator 21.

When the ultrashort pulse laser oscillator 21 receives the drive signal from the controller 24, the ultrashort pulse laser oscillator 21 generates and outputs laser light with the fluence and the pulse width specified by the drive signal. The ultrashort pulse laser light generated from the ultrashort pulse laser oscillator 21 enters the scanning optical system 22. The scanning optical system 22 forms the ultrashort pulse laser light into a desired beam shape to concentrate the light onto a predetermined position on the surface of the stationary-side seal ring 5, the workpiece, on the XYZ stage 25. When laser irradiation at a certain point reaches a specified number of shots, the galvano scanner 23 and the XYZ stage 25 are driven to relatively move the ultrashort pulse laser and the stationary-side seal ring 5, the workpiece. This allows laser irradiation of the stationary-side seal ring 5, one workpiece, at a plurality of positions.

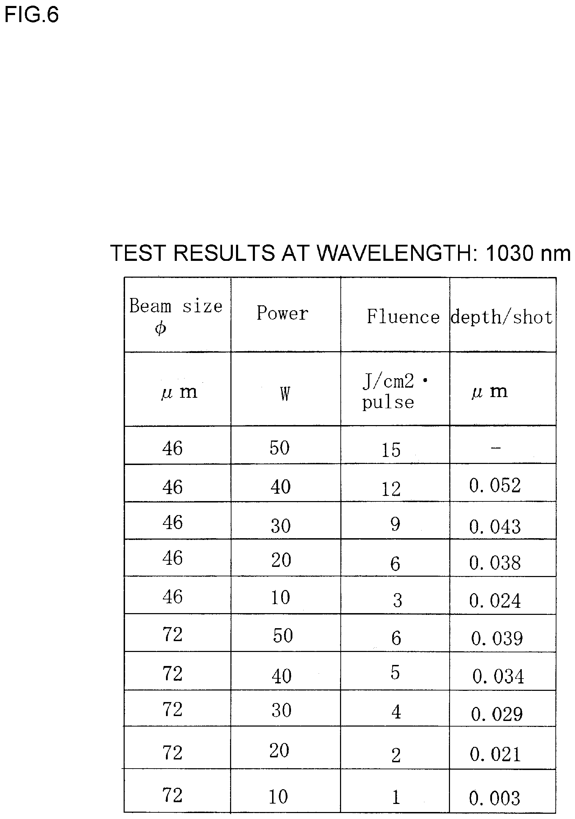

Fig. 6 shows processing test results on each of the basic parameters. A picosecond laser with an ultrashort pulse laser wavelength of 1030 nm and a pulse width of 10 ps or less was used.

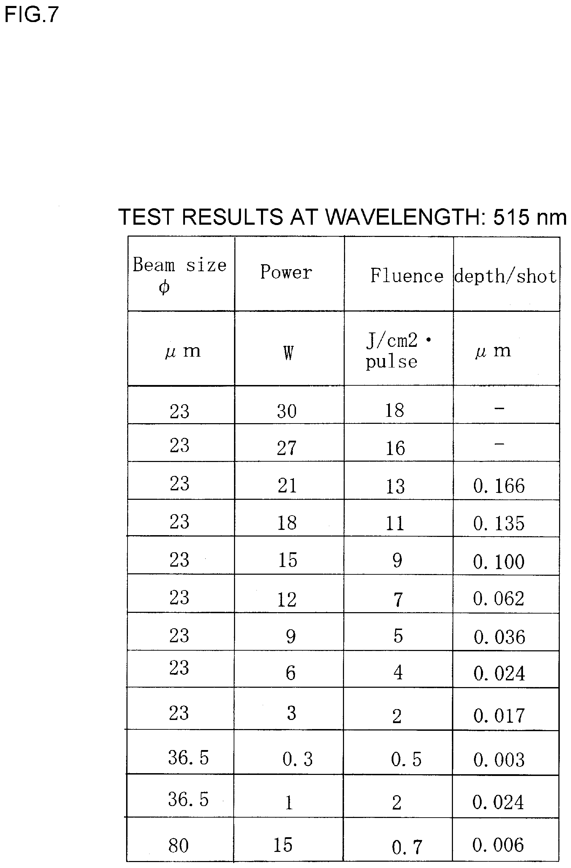

Fig. 7 shows processing test results on each of the basic parameters. A picosecond laser with an ultrashort pulse laser wavelength of 515 nm and a pulse width of 10 ps or less was used.

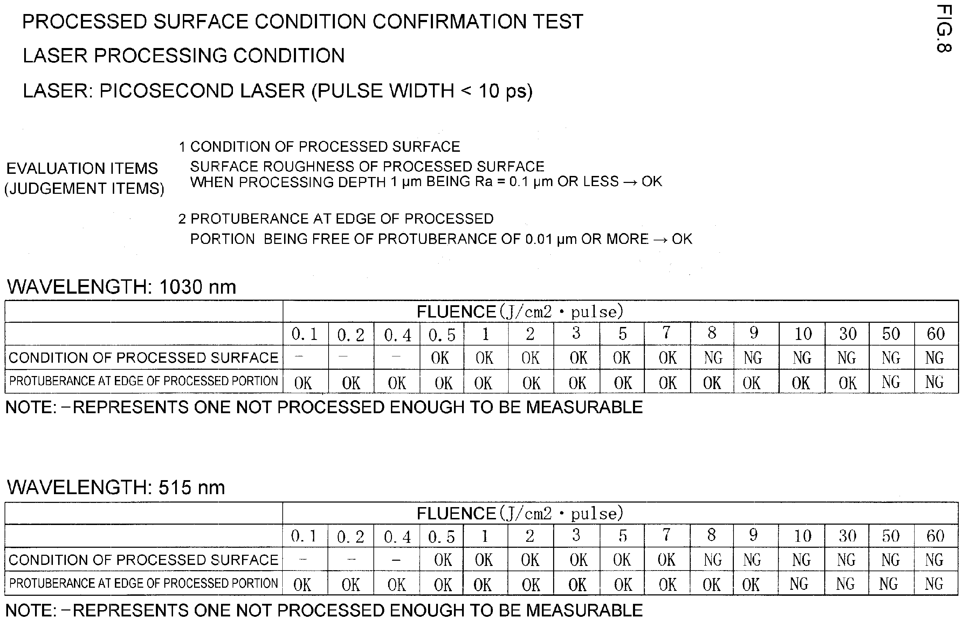

Fig. 8 is a chart showing evaluation results on the condition of a processed surface and protuberance at a processed portion edge when processed with different irradiation fluences with ultrashort pulse laser wavelengths of 1030 nm and 515 nm. Evaluation items are:
(1) the condition of a processed surface and (2)the condition of a protuberance formed by debris at the edge of a processed portion. In Fig. 6, regarding the condition of a processed surface, when roughness Ra of the processed surface (referring to the bottom surface of a dimple. The same applies hereinafter) is 1/10 or less of a processing depth, it is OK, and otherwise NG, and regarding the protuberance at a processed portion edge, when the protuberance formed by debris at the edge of the processed portion (the edge of a dimple) is less than 0.01 µm, it is OK, and otherwise NG.

According to Fig. 8, when the wavelength of the ultrashort pulse laser is 1030 nm, for the condition of the processed surface, with fluences of 0.5, 1, 2, 3, 5, and 7, the roughness Ra was 1/10 or less of the processing depth. For the condition of protuberance at the edge of the processed portion, with fluences of 0.1, 0.2, 0.4, 0.5, 1, 2, 3, 5, 7, 8, 9, 10, and 30, the protuberance was less than 0.1 µm.

When the wavelength of the ultrashort pulse laser is 515 nm, for the condition of the processed surface, with fluences of 0.5, 1, 2, 3, 5, and 7, the roughness Ra was 1/10 or less of the processing depth. For the condition of protuberance at the edge of the processed portion, with fluences of 0.1, 0.2, 0.4, 0.5, 1, 2, 3, 5, 7, 8, and 9, the protuberance was less than 0.01 µm.

From the above results, it has been found that the energy fluence of the ultrashort pulse laser used in the processing process is favorable in a range of 0.5 J/(cm²·pulse) to 7 J/(cm²·pulse).

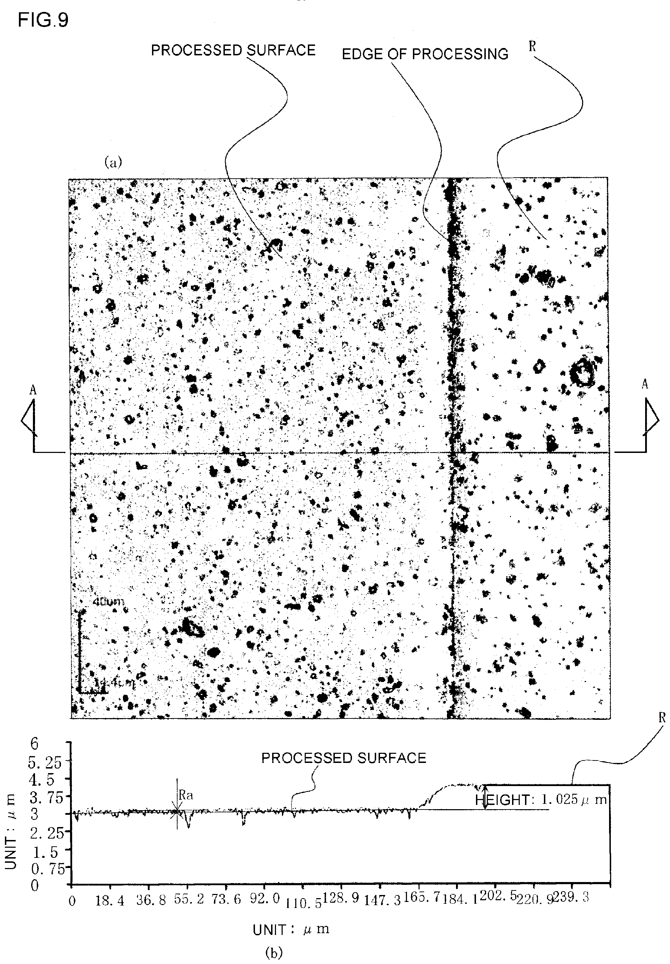

Fig. 9 shows the condition of a processed surface when processed using a picosecond laser as the ultrashort pulse laser, and (a) is a micrograph of the processes surface, and (b) illustrates a cross section of (a) along A-A, representing the roughness of the processed surface. The used wavelength of the ultrashort pulse laser is 1030 nm, the energy fluence is 2.5 J/(cm²·pulse), and the processing depth in one shot is 0.02 µm.

From Fig. 9(b), the depth of the processed surface (referring to the bottom surface of a dimple. The same applies hereinafter) was 1.025 µm, and the roughness Ra of the processed surface was about 0.03 µm. The surface roughness Ra of the processed surface was about 3/100 of the processing depth, which was sufficiently smaller than 1/10 of the processing depth. A protuberance formed by debris at the edge of a processed portion (the edge of the dimple) was 0.01 µm, which was very small.

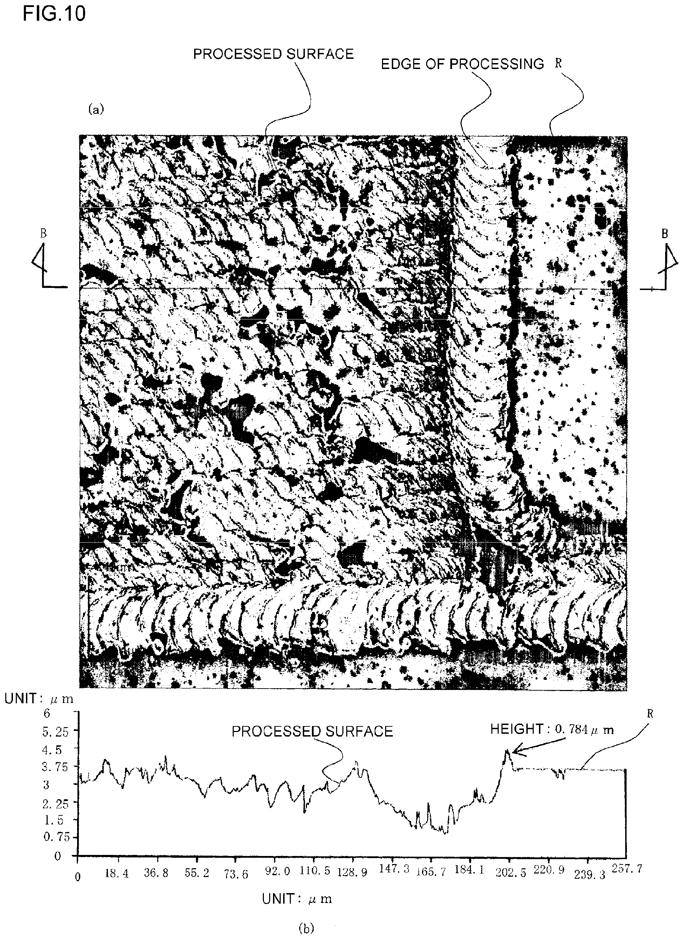

Fig. 10 shows the condition of a processed surface when processed using a nanosecond laser as a pulse laser, and (a) is a micrograph of the processes surface, and (b) illustrates a cross section of (a) along B-B, representing the roughness of the processed surface.

From Fig. 10(b), the roughness Ra of the processed surface (the bottom surface of a dimple) is about 0.75 µm. A protuberance formed by debris at the edge of a processed portion (the edge of the dimple) is about 0.784 µm.

The above shows that of the condition of the processed surface when processed using the nanosecond laser, the roughness Ra of the processed surface (the bottom surface of a positive-pressure generation groove and a negative-pressure generation groove) is about 25 times, and the protuberance formed by debris at the edge of the processed portion (the edge of the dimple) is about 78 times those of the condition of the processed surface when processed using the picosecond laser.

In the present invention, since a sliding part made of SiC, Al2O3 or ceramics is processed using an ultrashort pulse laser with a very short pulse width, the temperature around a region irradiated with the ultrashort pulse laser is less prone to being increased than when irradiated with a conventional nanosecond laser. This is because the generation of heat by one pulse in an ultrashort pulse laser is extremely smaller than that in a common nanosecond laser. Therefore, while a portion irradiated with an ultrashort pulse laser is removed by ablation by the irradiation of the laser to form a flat groove, the edge of the groove does not protrude with debris due to the irradiation of the laser, providing a very clean processed surface. In particular, by controlling the energy fluence of an ultrashort pulse laser, a very flat processed surface and a highly accurate groove without protuberance formed by debris at the processed edge can be precisely formed.

Since an ultrashort pulse laser is used for processing as described above, the heat effect of the laser on the surroundings of an irradiated region can be made very small. This can prevent the occurrence of a problem that the temperature around a laser-irradiated region on a sliding face of a sliding part made of SiC or the like increases due to laser irradiation, causing undulation in the sliding face by the effect of the heat. Further, the conventional machining cannot perform processing with a groove depth of 0.05 µm to 5 µm. Furthermore, there are problems that known ion milling takes much processing time, and etching takes both time and cost.

In the processing using an ultrashort pulse laser in the present invention, the energy fluence is set in a range of 0.5 J/ (cm²·pulse) to 7 J/ (cm²·pulse), thereby providing a highly accurate sliding face with very flat processed surfaces without protuberances formed by debris at processed edges, and good working efficiency.

With an energy fluence of 8 J/(cm²·pulse) or more, pulse energy in one shot is too large, thus causing a rough processed surface and increasing roughness Ra.

Further, with an energy fluence of 50 J/(cm²·pulse) or more at a wavelength of 1030 nm, or with an energy fluence of 10 J/ (cm²·pulse) or more at a wavelength of 515 nm, debris occurs, causing the edge of a processed portion to protrude.

When a sliding part is formed from one material of SiC, Al2O3, ceramics, cemented carbide, and stainless, the energy fluence of an ultrashort pulse laser is preferably in a range of 0.5 J/(cm²·pulse) to 7 J/(cm²·pulse).

The functions and effects of the sliding component processed according to the embodiment of the present invention are as below.
(1) A plurality of dimples is provided mutually independently of the other dimples and disposed in a randomly distributed manner, each of the dimples is formed by irradiation with an ultrashort pulse laser, constituting a shallow groove with a depth in a range of 0.05 µm to 5 µm, and the roughness Ra of the bottom surface of the dimples is 1/10 or less of a processing depth, so that the friction coefficient can be reduced in a wide range of bearing characteristic numbers, and a fluid film between the sliding faces can be increased to improve lubrication performance, and a predetermined dynamic pressure can be generated by accurate positive-pressure generation grooves, and further the sliding face has no undulations because the effect of heat during processing is small, so that the sliding component having the sliding faces with good sealing performance can be provided.
(2) A protuberance formed by debris at the edge of a processed portion is less than 0.01 µm, so that the sliding component having the sliding faces with better sealing performance can be provided.
(3) The plurality of dimples has an opening diameter set preferably in a range of 10 to 500 µm, and more preferably 30 to 100 µm, so that the sliding characteristics can be further improved in a wide range of bearing characteristic numbers on the sliding face.
(4) The plurality of dimples has a depth set in a range of 50 to 10000 nm, so that the friction coefficient on the sliding face can be reduced.
(5) The plurality of dimples has a depth set preferably in a range of 50 to 1000 nm, and more preferably 50 to 500 nm, so that the sliding characteristics at extremely low speed can be made favorable.
(6) The plurality of dimples has an area ratio to the sliding face set in a range of 30 to 50%, so that both sealing and lubrication can be achieved.
(7) The repetition frequency of the ultrashort pulse laser is 5 kHz or higher, so that processing time can be set at a proper value even when the number of pulse repetitions is large.
(8) The pulse width of the ultrashort pulse laser is less than 10 picoseconds, so that heat generation by one pulse can be reduced.

Although the form of implementing the present invention has been described above, the specific configuration is not limited to the form of the embodiment. Any change and addition without departing from the scope of the present invention, which is defined by the attached claims, are included in the present invention.

For example, the embodiment has been described on an example where the sliding part is used as at least one of a pair of a rotating seal ring and a stationary seal ring in a mechanical seal device, but it can also be used as a bearing sliding part that slides on a rotating shaft while sealing lubricating oil on axially one side of a cylindrical sliding face.

Further, for example, although the embodiment has been described on a case where high-pressure sealed fluid is present on the outer peripheral side, the sliding component is applicable to a case where high-pressure fluid is on the inner peripheral side. In that case, dimples may be arranged to communicate with the inner peripheral side.

Further, for example, although the embodiment has been described on a case where a plurality of dimples has an opening diameter set preferably in a range of 10 to 500 µm, and more preferably 30 to 100 µm, these show a preferable example and are not limiting. It is important that a plurality of dimples be distributed randomly. The distribution ratio may be set at an optimum value depending on the bearing characteristic number G (fluid viscosity × velocity / load) of a sliding face.

Further, for example, in the embodiment, it has been described that the depth of the plurality of dimples is selected from a range of 50 to 10000 nm from the aspect of friction coefficient reduction, but in order to make the sliding characteristics at extremely low speed favorable, the depth is set preferably in a range of 50 to 1000 nm, and more preferably 50 to 500 nm.

Further, for example, the embodiment has been described on a case where 40% was used as the area ratio of a plurality of dimples to a sliding face from the aspect of achieving both sealing and lubrication, but the area ratio is not limited to this, and may be in a range of 30 to 50%.

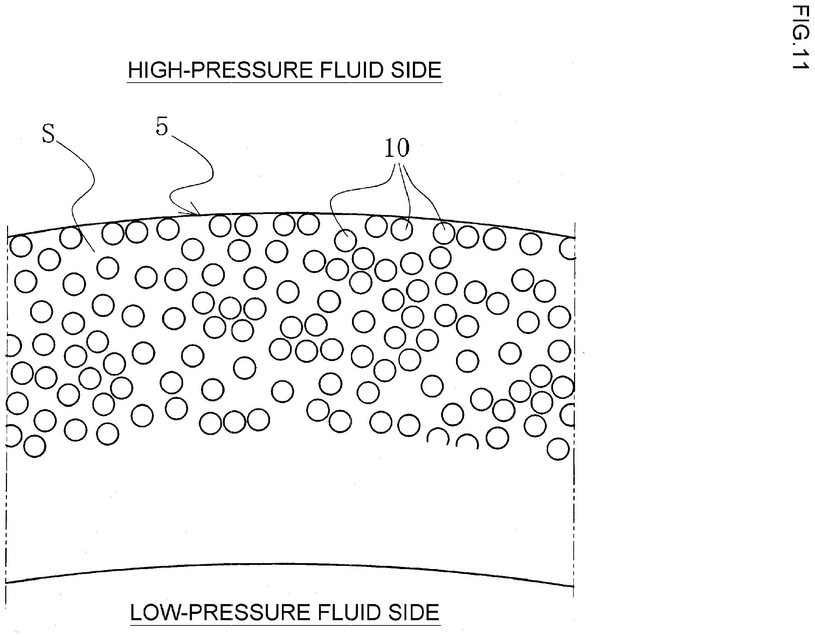

Further, for example, the embodiment has been described on a case where the dimples 10 are provided on almost all portions except the low-pressure fluid side sealing face IS formed such that the flat land portion R of a fixed width is left circumferentially on the low-pressure fluid side, but this is not limiting. As shown in Fig. 11, a plurality of dimples 10 of the same opening diameter may be disposed randomly only on the high-pressure fluid side in the radial direction of a sliding face without providing dimples on the low-pressure fluid side (including the low-pressure fluid side sealing face IS) to leave it in a flat state. In the case in Fig. 11, dimples are provided across an approximately 60% width of the high-pressure fluid side in the radial direction of the sliding face, and an approximately 40% width of the low-pressure fluid side is formed in a flat shape without dimples. Thus, the width of a sealing region can be increased, reducing the amount of leakage compared to a case where dimples are provided on almost the entire region.

The range in which dimples are provided is not limited to an approximately 60% width, and may be a 20 to 80% width, for example.

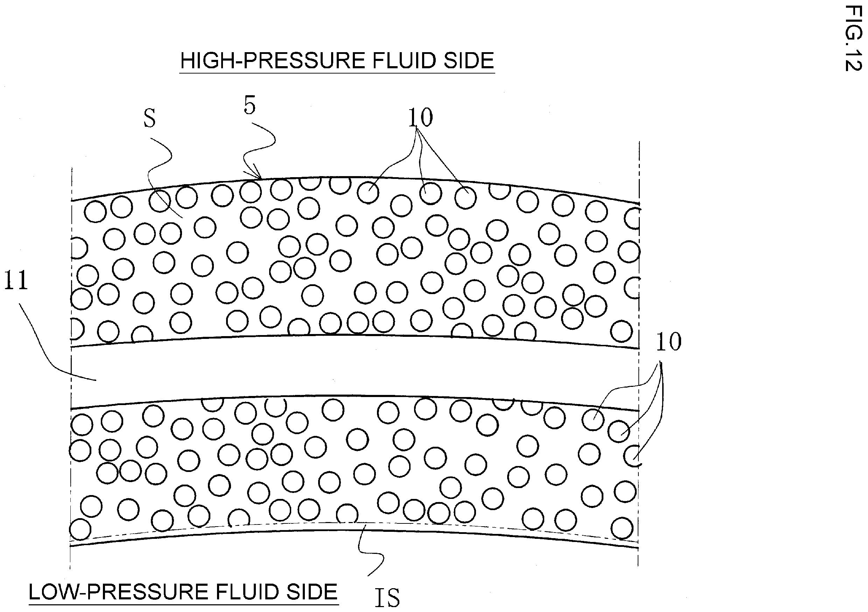

Further, for example, as shown in Fig. 12, a deep groove 11 may be provided almost at the radial center of the sliding face along the entire circumference, and a plurality of dimples 10 of the same opening diameter may be disposed randomly on sliding faces on radially opposite sides of the deep groove 11. At that time, on the sliding face on the low-pressure fluid side of the deep groove 11, no dimples 10 are provided on the low-pressure fluid side sealing face IS.

In this case, fluid threatening to leak from the high-pressure fluid side to the low-pressure fluid side is trapped in the deep groove 11, so that the amount of leakage can be reduced, and abrasion powder on the sliding face can also be captured in the deep groove 11, so that the wear of the sliding face can be reduced.

The deep groove 11 may be configured to communicate with the high-pressure fluid side via a radial groove.

### Reference Sign List

- 1: Rotating shaft
- 2: Sleeve
- 3: Rotating-side seal ring
- 4: Housing
- 5: Stationary-side seal ring
- 6: Coiled wave spring
- 7: Bellows
- 10: Dimple
- 10a: Rayleigh step
- 11: Deep groove
- 20: Processing device
- 21: Ultrashort pulse laser oscillator
- 22: Scanning optical system
- 23: Galvano scanner
- 24: Controller
- 25: XYZ stage
- 26: Base
- 27: Elevating member
- 28: Shaft
- S: Sliding face
- IS: Low-pressure fluid side sealing face
- R: Land portion

## Claims

1. Method of processing a sliding component, the sliding component comprising a pair of sliding parts (3, 5),
the sliding component comprising a plurality of dimples (10) being formed by irradiation with an ultrashort pulse laser generated by an ultrashort pulse laser oscillator (21), wherein
the plurality of dimples (10) is disposed on at least one of sliding faces (S) of the pair of sliding parts (3, 5) relatively sliding on each other, and being provided mutually independently of the other dimples and disposed in a randomly distributed manner,
each of the dimples (10) constituting a shallow groove with a depth in a range of 0.05 µm to 10 µm, and
the plurality of dimples has an opening diameter set in a range of 10 to 500 µm,
**characterized in that**
the dimples (10) have a bottom surface whose roughness Ra is 1/10 or less of a processing depth, wherein
a protuberance formed by debris at an edge of a processed portion is less than 0.01 µm, wherein
the sliding part (3, 5) is formed from one material of SiC, Al2O3, and ceramics,
the ultrashort pulse laser has a repetition frequency of 5 kHz or higher and a pulse width of less than 10 picoseconds, and
the energy fluence of the ultrashort pulse laser is in a range of 0.5 J/(cm²·pulse) to 7 J/(cm²·pulse).

2. The method according to claim 1, wherein
the plurality of dimples has a depth set in a range of 50 to 5000 nm.

3. The method according to claim 1, wherein
the plurality of dimples has a depth set in a range of 50 to 1000 nm.

4. The method according to any one of claims 1 to 3, wherein
the plurality of dimples has an area ratio to the sliding face set in a range of 30 to 50%.

## Patentansprüche

1. Verfahren zur Bearbeitung eines Gleitbauteils, wobei das Gleitbauteil ein Paar Gleitteile (3, 5) aufweist,
das Gleitbauteil eine Vielzahl von Vertiefungen (10) aufweist, die durch Bestrahlung mit einem von einem Ultrakurzpuls-Laseroszillator (21) erzeugten Ultrakurzpuls-Laser gebildet werden, wobei
die Vielzahl von Vertiefungen (10) auf mindestens einer der Gleitflächen (S) des Paares Gleitteile (3, 5) angeordnet ist, die relativ zueinander gleiten, und unabhängig von den anderen Vertiefungen vorgesehen und in einer zufällig verteilten Weise angeordnet ist,
jede der Vertiefungen (10) eine flache Nut mit einer Tiefe in einem Bereich von 0,05 µm bis 10 µm bildet, und
die Vielzahl der Vertiefungen einen Öffnungsdurchmesser hat, der in einem Bereich von 10 bis 500 µm liegt,
**dadurch gekennzeichnet, dass**
die Vertiefungen (10) eine Bodenfläche aufweisen, deren Rauigkeit Ra 1/10 oder weniger einer Bearbeitungstiefe beträgt, wobei
eine durch Ablagerungen gebildete Ausstülpung an einem Rand eines bearbeiteten Abschnitts weniger als 0,01 µm beträgt, wobei
das gleitende Teil (3, 5) aus einem Material aus SiC, Al2O3 und Keramik ausgebildet ist,
der Ultrakurzpulslaser eine Wiederholungsfrequenz von 5 kHz oder höher und eine Pulsbreite von weniger als 10 Pikosekunden aufweist, und die Energiefluenz des Ultrakurzpulslasers in einem Bereich von 0,5 J/(cm2·Puls) bis 7 J/(cm2·Puls) liegt.

2. Verfahren nach Anspruch 1, wobei
die Vielzahl von Vertiefungen eine Tiefe aufweist, die in einem Bereich von 50 bis 5000 nm liegt.

3. Verfahren nach Anspruch 1, wobei
die Vielzahl von Vertiefungen eine Tiefe aufweist, die in einem Bereich von 50 bis 1000 nm liegt.

4. Verfahren nach einem der Ansprüche 1 bis 3, wobei
die Vielzahl von Vertiefungen ein Flächenverhältnis zur Gleitfläche aufweist, das in einem Bereich von 30 bis 50 % liegt.

## Revendications

1. Procédé de façonnage d'un composant coulissant, le composant coulissant comprenant une paire de parties coulissantes (3, 5),
le composant coulissant comprenant une pluralité de cupules (10) formées par irradiation avec un laser à impulsions ultracourtes généré par un oscillateur laser à impulsions ultracourtes (21), dans lequel
la pluralité de cupules (10) est disposée sur au moins l'une des faces coulissantes (S) de la paire de parties coulissantes (3, 5) coulissant relativement l'une sur l'autre, et en étant disposée mutuellement indépendamment des autres cupules et disposée d'une manière distribuée au hasard,
chacune des cupules (10) constituant une rainure peu profonde ayant une profondeur située dans la plage allant de 0,05 µm à 10 µm, et
la pluralité de cupules a un diamètre d'ouverture établi dans la plage allant de 10 à 500 µm,
**caractérisé en ce que** les cupules (10) ont une surface inférieure dont la rugosité Ra est de 1/10 ou moins de la profondeur d'usinage,
dans lequel une protubérance formée par des débris au niveau d'un bord de la partie usinée est inférieure à 0,01 µm,
dans lequel la partie coulissante (3, 5) est formée à partir d'un matériau parmi SiC, Al2O3, et les céramiques,
le laser à impulsions ultracourtes a une fréquence de répétition de 5 kHz ou plus et une largeur d'impulsion inférieure à 10 picosecondes, et
la fluence énergétique du laser à impulsions ultracourtes est située dans la plage allant de 0,5 J/(cm²•impulsion) à 7 J/(cm²•impulsion).

2. Procédé selon la revendication 1, dans lequel la pluralité de cupules a une profondeur établie dans la plage allant de 50 à 5 000 nm.

3. Procédé selon la revendication 1, dans lequel la pluralité de cupules a une profondeur établie dans la plage allant de 50 à 1 000 nm.

4. Procédé selon l'une quelconque des revendications 1 à 3, dans lequel la pluralité de cupules a un rapport de surface à la face coulissante établi dans la plage allant de 30 à 50 %.
